# EUROPÄISCHE PATENTSCHRIFT

(11) **EP 2 520 374 B1**
(45) Veröffentlichungstag und Bekanntmachung des Hinweises auf die Patenterteilung: **20.01.2016**
(21) Anmeldenummer: 12001776.9
(22) Anmeldetag: 15.03.2012
(51) Int. Cl.: B05B 13/04, B05C 13/00

(54) **Verfahren und Vorrichtung zum Lackieren**
Method and device for varnishing
Procédé et dispositif destinés au laquage

(30) Priorität: 05.05.2011 DE 102011100690
(43) Veröffentlichungstag der Anmeldung: 07.11.2012
(73) Patentinhaber: Asis GmbH, 84036 Landshut (DE)
(72) Erfinder: Schueller-Eckert, Eva, 64546 Moerfelden-Walldorf (DE); Multhammer, Hans-Jürgen, 84066 Mallersdorf-Pfaffenberg (DE)
(74) Vertreter: Wunderlich, Rainer

(56) Entgegenhaltungen:
- EP-A2- 1 745 858
- WO-A1-00/67915

## Beschreibung

Die Erfindung betrifft ein Verfahren zum Lackieren eines Bauteils nach dem Oberbegriff des Anspruchs 1 und eine Vorrichtung zum Lackieren eines Bauteils nach dem Oberbegriff des Anspruchs 6.

Hinsichtlich des Verfahrens ist vorgesehen, dass das Bauteil mittels einer Fördereinrichtung transportiert und mittels eines Lackierroboters lackiert wird.

Die Vorrichtung ist insbesondere zur Durchführung des Verfahrens vorgesehen und umfasst einen Lackierroboter zum Lackieren des Bauteils und eine Fördereinrichtung zum Transportieren des Bauteils.

Im Stand der Technik sind Lackiervorrichtungen bekannt, bei denen die zu lackierenden Teile, zum Beispiel Automobilstoßfänger, auf Warenträgern, sogenannten Lackier-Skids, in eine Lackierkabine eingefördert und dann von einem Roboter lackiert werden. Der Betrieb der Lackierkabine bedarf dabei eines hohen Energieeinsatzes, da Luftführung und Konditionierung der Luft sowie auch eine durchzuführende Abluftreinigung sehr energieintensiv sind.

Die Warenträger der bekannten Lackiervorrichtungen dienen zum einen dazu, die zu lackierenden Bauteile in die Lackierkabine einzufördern beziehungsweise durch diese hindurch zu transportieren. Zum anderen haben die Warenträger die Aufgabe, die Bauteile während des Lackierens in geeigneter Weise zu halten. Die Warenträger müssen hierzu so gestaltet sein, dass die Bauteile möglichst von allen Seiten zugänglich sind. Andererseits müssen die Warenträger sicherstellen, dass die Bauteile während des Lackierens sicher und vibrationsfrei positioniert sind, damit eine qualitativ hochwertige Lackierung gewährleistet werden kann. All dies führt dazu, dass die Gestaltung der Warenträger entsprechend aufwendig und kostenintensiv ist.

Zudem bestehen bekannte Warenträger zumeist aus Stahl und sind dementsprechend schwer. Bei einer Nutzlast von beispielsweise 8 kg wiegen bekannte Warenträger etwa 80 kg. Die Warenträger werden in einem der Lackierung gegebenenfalls nachgeschalteten Trockner mit aufgeheizt und müssen dann entsprechend auch wieder gekühlt werden. Auch dieser Aspekt trägt zu den hohen Energiekosten einer Lackierung bei.

In EP 1 745 858 A2 wird eine Vorrichtung zum Lackieren eines Bauteils beschrieben. Das Bauteil wird auf Schienen von einem Transportschlitten befördert. Mit einem Handhabungsroboter wird ein zu lackierendes Bauteil entnommen und zu einem Applikationsroboter geführt, der das Bauteil lackiert.

In WO 00/67915 wird eine Anlage beschrieben, bei welcher mit einem Roboter ein Bauteil, das mit beispielsweise Farbe oder Kleber beschichtet werden soll, zu einem Beschichtungsgerät bewegt wird. Zum Greifen des Bauteils weist der Roboter einen Arm mit Saugnäpfen auf.

Der Erfindung liegt die **Aufgabe** zugrunde, ein Verfahren sowie eine Vorrichtung zum Lackieren eines Bauteils anzugeben, mit welchen eine besonders wirtschaftliche Lackierung möglich ist.

Die Aufgabe wird in einem ersten Aspekt durch ein Verfahren mit den Merkmalen des Anspruchs 1 und in einem zweiten Aspekt durch eine Vorrichtung mit den Merkmalen des Anspruchs 6 gelöst. Bevorzugte Ausführungsformen der Erfindung sind in den abhängigen Ansprüchen angegeben.

Ein erster Grundgedanke der Erfindung besteht darin, eine Fördereinrichtung vorzusehen, welche das zu lackierende Bauteil, beispielsweise von einer vorangehenden Bearbeitungsstation, zu einer Lackierstation hin und nach dem Lackieren von der Lackierstation, insbesondere zu einer nachgeschalteten Bearbeitungsstation, weg transportiert. Dies ermöglicht eine automatisierte Lackierung einer großen Anzahl von Bauteilen, ohne dass jedes einzelne Bauteil manuell zu der Lackierstation, an welcher die Lackierung stattfindet, gebracht werden muss.

Ein zweiter Grundgedanke der Erfindung besteht darin, die Lackierung oder Beschichtung des Bauteils neben oder beabstandet von der Fördereinrichtung durchzuführen. Die Lackierung erfolgt also in einem Zustand, in welchem das Bauteil von der Fördereinrichtung entfernt ist. Erfindungsgemäß ist dabei vorgesehen, das Bauteil zum Zweck der Lackierung von der Fördereinrichtung herunter zu nehmen und nach dem Lackiervorgang für einen Weitertransport der Fördereinrichtung zurückzugeben.

Es findet also eine weitgehende Trennung der Aspekte Transportieren des Bauteils hin zu beziehungsweise weg von der Lackierstation und Halten des Bauteils während des Lackierens statt. Das Transportieren wird durch die Fördereinrichtung wahrgenommen, während zum Halten eine separate Halteeinrichtung vorgesehen sein kann. Die Lackierung selbst erfolgt also nicht auf der Fördereinrichtung.

Diese strukturelle Trennung von Transport- und Halteaufgaben ermöglicht eine wesentlich einfachere Gestaltung der Fördereinrichtung, welche beispielsweise nicht notwendigerweise eine vollständige Zugänglichkeit des Bauteils gewährleisten muss. Insbesondere werden daher anstelle der schweren Lackier-Skids wesentlich leichtere und einfacher gestaltete Warenträger eingesetzt werden. Sofern ein Trockner und/oder eine Kühlzone vorgesehen ist, müssen nur diese leichteren Warenträger dort erwärmt und abgekühlt werden. Das erfindungsgemäße Verfahren und die erfindungsgemäße Vorrichtung ermöglichen daher eine Lackierung mit verringerten Energie- und Betriebskosten.

Der Handhabungsroboter dient nicht nur zum Entnehmen des Bauteils von der Fördereinrichtung, sondern auch als Halteeinrichtung, die das Bauteil während der Lackierung hält.

Erfindungsgemäß ist es daher bevorzugt, dass das Bauteil während des Lackierens am Handhabungsroboter angeordnet ist. Der Handhabungsroboter nimmt also das Bauteil auf und hält es dem Lackierroboter zum Lackieren hin. Für eine möglichst optimale Positionierung des Bauteils weist der Handhabungsroboter vorzugsweise mindestens einen gegenüber einer Basis dreidimensional bewegbaren Handhabungsarm auf, an welchem das Bauteil positionierbar ist.

Die variable Positionierung des Bauteils durch den Handhabungsroboter ermöglicht es, einen kleineren Lackierroboter einzusetzen, als dies bei einer starren Positionierung des Bauteils auf der Fördereinrichtung möglich wäre. Dies wiederum bietet die Möglichkeit, auch eine Lackierkabine, in welcher der Lackierroboter positioniert ist, vergleichsweise klein auszuführen.

Bei der Lackierung sind häufig von oben nach unten gerichtete Luftströmungen erwünscht. Dadurch, dass das Bauteil während des Lackiervorgangs nicht auf einer sich insbesondere horizontal bewegenden Fördereinrichtung positioniert ist, werden diese Luftströmungen kaum gestört. Außerdem werden durch die vergleichsweise kleine Lackierkabine die bewegten Luftmengen insgesamt vermindert, was zu einer weiteren Reduzierung der Energie- beziehungsweise Betriebskosten führt.

Eine besonders effektive Lackierung kann dadurch erzielt werden, dass der Handhabungsroboter das Bauteil während eines Lackiervorgangs, welcher durch den Lackierroboter ausgeführt wird, in unterschiedlichen Positionen hält. Dabei können die Positionen insbesondere in Abhängigkeit einer aktuellen oder konkreten Lackieraufgabe gewählt und gegebenenfalls während der Lackierung verändert werden. Abhängig von einer durchzuführenden Lackieraufgabe kann das Bauteil zum Beispiel entweder still gehalten oder, insbesondere mit einer vorhandenen Luftströmung, bewegt werden. Durch die Lackierung mit der Luftströmung kann ein sogenannter Lackoverspray reduziert werden.

Grundsätzlich kann das zu lackierende Bauteil durch den Handhabungsroboter direkt gegriffen und zum Zweck der Lackierung von der Fördereinrichtung entnommen wird. Zur Lackierung unterschiedlicher Bauteile mittels ein und desselben Handhabungsroboters wird aber das Bauteil während des Lackierens auf oder an einem Waren- oder Werkstückträger angeordnet, welcher durch den Handhabungsroboter gehalten wird. Das zu lackierende Bauteil wird also zusammen mit dem Warenträger von der Fördereinrichtung entnommen.

Der Warenträger ist eingerichtet, zum Transport des Bauteils an der Fördereinrichtung platziert zu werden. Der Handhabungsroboter und der Warenträger sind so aufeinander abgestimmt, dass der Handhabungsroboter den an der Fördereinrichtung angeordneten Warenträger greifen und anheben kann.

Der Handhabungsroboter muss damit nicht notwendigerweise an unterschiedliche Bauteile angepasst werden und benötigt beispielsweise keine komplizierten Greifmechanismen oder Ähnliches zum Greifen unterschiedlichster Bauteile. Der Handhabungsroboter muss lediglich dazu eingerichtet sein, den Warenträger zu greifen oder zu halten und von der Fördereinrichtung anzuheben.

Bei dem Warenträger kann es sich um ein standardisiertes und vergleichsweise leichtes Objekt handeln, welches im Vergleich zu herkömmlichen Lackier-Skids ein erheblich geringeres Gewicht aufweisen kann. Beispielsweise kann es sich bei dem Warenträger um eine Transportpalette handeln, auf welcher das Bauteil positioniert werden kann. Auch kann es sich um ein Gestell zur Aufnahme des Bauteils handeln.

Nach dem Lackieren wird das Bauteil erfindungsgemäß erneut auf der Fördereinrichtung platziert. Beispielsweise kann das Bauteil an dieselbe Position, von welcher es zuvor entnommen wurde, zurückgegeben werden. Die Fördereinrichtung umfasst ein Förderband und/oder einzelne Förderschlitten, wobei das Bauteil an dieselbe Stelle des Förderbandes und/oder an denselben Förderschlitten zurückgegeben werden kann.

Mittels der Fördereinrichtung kann das Bauteil nach dem Lackieren zu einer weiteren Bearbeitungsstation, insbesondere einem Trockner, einer Härtstation und/oder einer Kühlzone gefördert werden.

Zweckmäßigerweise ist der Lackierroboter in einer Lackierkabine angeordnet. Unter einer Lackierkabine kann insbesondere eine Zone zum Lackieren verstanden werden, die durch mindestens eine Abtrennwand begrenzt ist. Vorzugsweise weist die Lackierkabine mindestens einen Zugang auf, über welchen das Bauteil in die Lackierkabine ein- und aus dieser ausgebracht werden kann. Vorzugsweise wird das Bauteil mittels der Fördereinrichtung und/oder mittels des Handhabungsroboters in die Lackierkabine transportiert.

In einer bevorzugten Ausführung ist die Fördereinrichtung als Bandförderer ausgebildet. Die Fördereinrichtung kann insbesondere ein Förderband, beispielsweise einen Bodenförderer, umfassen, mit welchem das zu lackierende Bauteil entlang einer vorgegebenen Förderbahn transportiert wird.

Vorzugsweise umfasst die Fördereinrichtung mindestens einen Förderschlitten, welcher entlang einer Förderbahn bewegbar ist. Da das Bauteil nicht auf der Fördereinrichtung lackiert wird, muss es sich bei dem Förderschlitten nicht um einen schweren Lackier-Skid handeln, sondern es können leichte Schlitten, beispielsweise in Form von Transportpaletten, insbesondere Rollpaletten, vorgesehen sein. Der Förderschlitten kann beispielsweise an dem Förderband angebracht und mittels des Förderbandes bewegt werden. Der Förderschlitten kann dabei auf einer Rollenbahn bewegt werden.

Es ist mindestens ein Warenträger vorgesehen, auf dem das zu lackierende Bauteil positionierbar ist. Bei dem Warenträger kann es sich um einen vergleichsweise leichten Träger, beispielsweise in Form eines Kunststoffgestells oder einer Palette handeln. Das Bauteil kann auf oder an dem Warenträger befestigt sein.

Der mindestens eine Warenträger ist lösbar an der Fördereinrichtung angeordnet und kann von dem Handhabungsroboter zusammen mit dem zu lackierenden Bauteil zum Lackieren des Bauteils von der Fördereinrichtung entnommen oder angehoben werden. Die Vorrichtung ist damit besonders flexibel hinsichtlich unterschiedlicher zu lackierender Bauteile. Beispielsweise kann der Warenträger eingerichtet sein, unterschiedlich gestaltete Bauteile aufzunehmen. Vorzugsweise umfasst der Warenträger einen Handhabungsbereich, der von dem Handhabungsroboter zum Halten des Warenträgers verwendet werden kann. Dieser Handhabungsbereich ist vorzugsweise bei allen Warenträgern ähnlich oder gleich ausgeführt.

Der Warenträger weist im Vergleich zu herkömmlichen Lackier-Skids ein geringes Gewicht auf. Dies wird dadurch erreicht, dass der Warenträger lediglich zum Tragen des zu lackierenden Bauteils eingerichtet sein muss und im Wesentlichen keine Warenförderung übernehmen muss. Der Warenträger wird auf dem Förderschlitten oder dem Förderband der Fördereinrichtung angeordnet, wobei der Förderschlitten oder das Förderband den Transport entlang der Förderbahn übernimmt.

Der Warenträger kann im Wesentlichen aus Kunststoff bestehen oder als wesentliche Komponenten Kunststoffe enthalten. Insbesondere kann der Warenträger weitgehend ohne Stahlanteile ausgeführt sein. Der Warenträger weist ein Gewicht auf, welches höchstens einer fünffachen, vorzugsweise höchstens einer vierfachen oder dreifachen, maximalen Nutzlast des Warenträgers entspricht.

Ein besonders effektives Lackieren wird dadurch erzielt, dass der Lackierroboter und der Handhabungsroboter mechanisch und/oder datentechnisch gekoppelt sind. Durch die Kopplung der beiden Roboter kann der Handhabungsroboter zur leichteren Erreichbarkeit während des Lackierens das zu lackierende Bauteil immer möglichst optimal vor den Lackierroboter positionieren. Insbesondere kann das zu lackierende Bauteil in Abhängigkeit eines Lackierfortschritts und/oder einer aktuellen Lackieraufgabe in einer gewünschten und möglichst optimalen Position gehalten werden. Dies ermöglicht eine nahezu unterbrechungsfreie Lackierung durch den Lackierroboter, wodurch insbesondere die Taktzeit reduziert werden kann.

Der Warenträger kann als sogenannter intelligenter Warenträger ausgebildet sein und einen Warenidentifikationscode, beispielsweise in Form eines RFID-Transponders, aufweisen. Dieser kann beispielsweise Informationen über das Bauteil umfassen, welches sich aktuell auf dem Warenträger befindet. Über eine Steuerung können dann der Lackierroboter und der Handhabungsroboter in Abhängigkeit des Warenidentifikationscodes gesteuert werden.

Ein Schutz der Umgebung und eine gleichzeitig effektive Lackierung kann dadurch erzielt werden, dass eine Lackierkabine vorgesehen ist, in welcher der Lackierroboter und der Handhabungsroboter angeordnet sind.

Grundsätzlich kann die Fördereinrichtung innerhalb der Lackierkabine verlaufen, wobei das zu lackierende Bauteil während der Lackierung von der Fördereinrichtung entnommen ist. Es ist jedoch bevorzugt, dass eine Lackierkabine vorgesehen ist, in welcher der Lackierroboter angeordnet ist, und dass die Fördereinrichtung außerhalb der Lackierkabine verläuft. Durch die insbesondere vollständig außerhalb der Lackierkabine verlaufende Fördereinrichtung kann die Fördereinrichtung gegen Schädigungen während der Lackierung geschützt werden. Zudem wird die Luftströmung von oben nach unten nicht durch die Fördereinrichtung, insbesondere nicht durch Lackier-Skids oder Förderschlitten, gestört.

Bei einer außerhalb der Lackierkabine verlaufenden Fördereinrichtung ist vorgesehen, dass der Handhabungsroboter das Bauteil vor der Lackierkabine aufnimmt und in die Lackierkabine hinein hebt.

Die Erfindung wird nachfolgend anhand einer beispielhaften Ausführungsform, welcher in der beigefügten schematischen Zeichnung dargestellt ist, weiter beschrieben. In der Zeichnung zeigt:

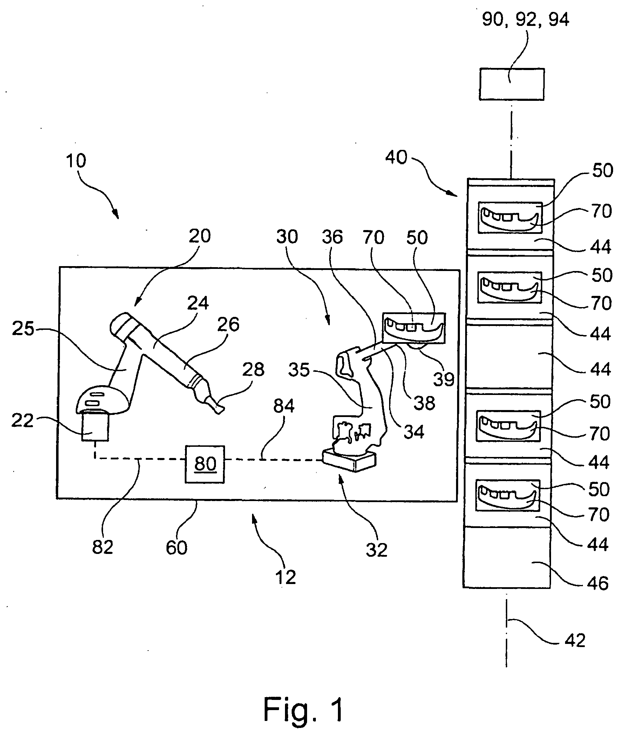

Fig. 1: eine Lackiervorrichtung gemäß der vorliegenden Erfindung.

Die erfindungsgemäße Vorrichtung zum Lackieren beziehungsweise Lackiervorrichtung 10 weist eine Lackierstation 12 mit einem Lackierroboter 20 und einem Handhabungsroboter 30 auf.

Der Lackierroboter 20 ist innerhalb einer Lackierkabine 60 angeordnet und umfasst eine Basis 22 und einen an der Basis 22 gelagerten Lackierarm 24. Der Lackierarm 24 umfasst mehrere zueinander drehbar gelagerte Armabschnitte 25, 26. An dem Lackierarm 24 ist eine Spritzeinrichtung 28 zum Aufbringen einer Lackierung angeordnet. Die Spritzeinrichtung 28 ist für eine flexible Aufbringung einer Lackierung oder Beschichtung auf ein Bauteil 70 in alle Raumrichtungen frei bewegbar. Bei dem zu lackierenden oder zu beschichtenden Bauteil 70 kann es sich insbesondere um ein Kunststoffteil handeln.

Der Handhabungsroboter 30, welcher auch als Handlings-Roboter bezeichnet werden kann, befindet sich ebenfalls in der Lackierkabine 60. An einer Basis 32 des Handhabungsroboters 30 ist ein Handhabungsarm 34 drehbar gelagert. Der Handhabungsarm 34 umfasst mehrere drehbar zueinander gelagerte Armabschnitte 35, 36. Weiter umfasst der Handhabungsroboter 30 einen Greif- oder Haltebereich 38 an einem der Armabschnitte 35, 36. Der Haltebereich 38 ist in alle Raumrichtungen frei bewegbar und kann zum Beispiel eine Halteplatte 39 aufweisen, auf welcher das zu lackierende Bauteil 70 angeordnet oder befestigt werden kann.

Zum Transportieren des zu lackierenden Bauteils 70 ist eine Fördereinrichtung 40 vorgesehen, welche auch allgemein als Materialzuführeinheit bezeichnet werden kann. Die Fördereinrichtung 40 umfasst ein Förderband 46, welches auch als Teileförderband oder Transportband bezeichnet werden kann. An dem Förderband 46 ist eine Mehrzahl von Förderschlitten 44 befestigt, welche durch das Förderband 46 entlang einer Förderbahn 42 bewegt werden. Die Förderschlitten 44 können beispielsweise nach Art von Warenpaletten oder als Rollenschlitten ausgebildet sein und können auf dem Förderband 46 positioniert sein.

Das Förderband 46 kann auch eine Kette oder ein Seil umfassen, mit welchem die Förderschlitten 44 entlang der vorgegebenen Förderbahn 42 transportiert werden können.

Die zu lackierenden Bauteile 70 sind jeweils auf einem separaten Warenträger 50 positioniert. Der Warenträger 50 kann beispielsweise eine Warenpalette oder ein Warengestell sein. Die Fördereinrichtung 40 kann dementsprechend auch als Palettenförderer bezeichnet werden. Der Warenträger 50 kann entweder direkt auf dem Förderband 46 oder gegebenenfalls auf einem Förderschlitten 44 positionierbar sein.

Zum Lackieren des Bauteils 70 entnimmt der Handhabungsroboter 30 das Bauteil 70 zusammen mit dem Warenträger 50 von der Fördereinrichtung 40. Der Handhabungsroboter 30 verwendet hierzu seinen Handhabungsarm 34, welcher den Warenträger 50 von dem Förderschlitten 44 und/oder dem Förderband 46 anhebt. Der Handhabungsroboter 30 hält das zu lackierende Bauteil 70 anschließend dem Lackierroboter 20 zum Lackieren hin. In Abhängigkeit einer konkret durchzuführenden Lackierungsaufgabe kann dabei die Position des Bauteils 70 eingestellt und gegebenenfalls während der Lackierung angepasst werden. Dadurch kann das Bauteil 70 leicht von dem Lackierroboter 20 erreicht werden.

Eine Steuerung 80 steuert sowohl den Lackierroboter 20 als auch den Handhabungsroboter 30. Die Steuerung 80 ist hierzu sowohl mit dem Lackierroboter 20 als auch mit dem Handhabungsroboter 30 datentechnisch über entsprechende Leitungen 82, 84 verbunden. Die Steuerung 80 kann auch in einen der beiden Roboter 20, 30 integriert sein oder es können separate Steuerungen für die Roboter 20, 30 vorgesehen sein, die miteinander gekoppelt sind. Durch die datentechnische Kopplung von Lackierroboter 20 und Handhabungsroboter 30 kann das Bauteil 70 stets optimal vor dem Lackierroboter 20 positioniert werden.

Die Fördereinrichtung 40 kann entweder durch die Lackierkabine 60 hindurchführen, oder, wie im konkreten Ausführungsbeispiel dargestellt, vollständig außerhalb der Lackierkabine 60 verlaufen. Um das zu lackierende Bauteil 70 in die Lackierkabine 60 zu fördern, ist eine Zugangsöffnung vorgesehen, durch welche der Handhabungsroboter 30 hindurch greifen kann. Mittels der Fördereinrichtung 40 kann das Bauteil 70 zu einem der Lackierstation 12 nachgeschalteten Trockner 90, einer Härtstation 92 und/oder einer Kühlzone 94 transportiert werden.

Insgesamt wird mit der erfindungsgemäßen Vorrichtung und dem erfindungsgemäßen Verfahren ein kostengünstiges Lackieren ermöglicht.

## Patentansprüche

1. Verfahren zum Lackieren eines Bauteils (70),
- bei dem das Bauteil (70) auf einem Warenträger (50) mittels einer Fördereinrichtung (40) transportiert und mittels eines Lackierroboters (20) lackiert wird,
- bei dem der Warenträger (50) zusammen mit dem Bauteil (70) vor dem Lackieren durch einen Handhabungsroboter (30) von der Fördereinrichtung (40) entnommen wird,
- bei dem das Bauteil (70) mittels des Lackierroboters (20) lackiert wird,
- bei dem das Bauteil (70) während des Lackierens an dem Warenträger (50) angeordnet ist, welcher durch den Handhabungsroboter (30) gehalten wird, und
- bei dem das Bauteil (70) nach dem Lackieren mittels des Handhabungsroboters (30) der Fördereinrichtung (40) erneut zugeführt wird,
**dadurch gekennzeichnet,**
**dass** der Warenträger (50) entlang einer Förderbahn (42) auf einem Förderschtitten (44) oder einem Förderband (46) der Fördereinrichtung (40) transportiert wird, wobei der Warenträger (50) selbst keine Warenförderung übernimmt,
**dass** der Warenträger (50) genau ein Bauteil (70) trägt und ein Gewicht aufweist, welches höchstens einer 5-fachen maximalen Nutzlast des Warenträgers (50) entspricht.

2. Verfahren nach Anspruch 1,
**dadurch gekennzeichnet,**
**dass** das Bauteil (70) während des Lackierens am Handhabungsroboter (30) angeordnet ist.

3. Verfahren nach Anspruch 1 oder 2,
**dadurch gekennzeichnet,**
**dass** der Handhabungsroboter (30) das Bauteil (70) während eines Lackiervorgangs, welcher durch den Lackierroboter (20) ausgeführt wird, in unterschiedlichen Positionen hält.

4. Verfahren nach einem der Ansprüche 1 bis 3,
**dadurch gekennzeichnet,**
**dass** das Bauteil (70) mittels der Fördereinrichtung (40) nach dem Lackieren zu einem Trockner (90), einer Härtstation (92) und/oder einer Kühlzone (94) gefördert wird.

5. Verfahren nach einem der Ansprüche 1 bis 4,
**dadurch gekennzeichnet,**
**dass** der Lackierroboter (20) in einer Lackierkabine (60) angeordnet ist und dass das Bauteil (70) mittels der Fördereinrichtung (40) und/oder mittels des Handhabungsroboters (30) in die Lackierkabine (60) transportiert wird.

6. Vorrichtung zum Lackieren eines Bauteils (70), insbesondere zur Durchführung des Verfahrens nach einem der Ansprüche 1 bis 5, mit
- einem Lackierroboter (20) zum Lackieren des Bauteils (70) und
- einer Fördereinrichtung (40) zum Transportieren des Bauteils (70),
- mindestens einem Warenträger (50), auf dem das zu lackierende Bauteil (70) positionierbar ist und welcher lösbar an der Fördereinrichtung (40) angeordnet ist,
- einem Handhabungsroboter (30), mit welchem der Warenträger (50) zusammen mit dem Bauteil (70) zum Lackieren von der Fördereinrichtung (40) entnehmbar und nach dem Lackieren der Fördereinrichtung (40) erneut zuführbar ist,
**dadurch gekennzeichnet,**
**dass** die Fördereinrichtung (40) mindestens einen Förderschlitten (44) oder ein Förderband umfasst, womit der Warenträger (50) entlang einer Förderbahn (42) transportierbar ist, wobei der Warenträger (50) selbst keine Warenförderung übernimmt,
**dass** mit dem Warenträger (50) genau ein Bauteil (70) tragbar ist und der Warenträger (50) ein Gewicht aufweist, welches höchstens einer 5-fachen maximalen Nutzlast des Warenträgers (50) entspricht.

7. Vorrichtung nach Anspruch 6,
**dadurch gekennzeichnet,**
**dass** der mindestens eine Warenträger (50) ein Gewicht aufweist, welches höchstens einer 4-fachen oder 3-fachen maximalen Nutzlast des Warenträgers (50) entspricht.

8. Vorrichtung nach Anspruch 6 oder 7,
**dadurch gekennzeichnet,**
**dass** der Lackierroboter (20) und der Handhabungsroboter (30) mechanisch und/oder datentechnisch gekoppelt sind.

9. Vorrichtung nach einem der Ansprüche 6 bis 8,
**dadurch gekennzeichnet,**
**dass** eine Lackierkabine (60) vorgesehen ist, in welcher der Lackierroboter (20) und der Handhabungsroboter (30) angeordnet sind.

10. Vorrichtung nach einem der Ansprüche 6 bis 9,
**dadurch gekennzeichnet,**
**dass** eine Lackierkabine (60) vorgesehen ist, in welcher der Lackierroboter (20) angeordnet ist, und
**dass** die Fördereinrichtung (40) außerhalb der Lackierkabine (60) verläuft.

## Claims

1. Method for painting a component (70),
- in which the component (70) is transported on a product carrier (50) by means of a conveying means (40) and painted by means of a painting robot (20),
- in which prior to painting the product carrier (50) together with the component (70) is removed from the conveying means (40) by a manipulating robot (30),
- in which the component (70) is painted by means of the painting robot (20),
- in which during painting the component (70) is arranged on the product carrier (50), which is held by the manipulating robot (30), and
- in which after painting the component (70) is re-delivered to the conveying means (40) by means of the manipulating robot (30),
**characterized in that**
the product carrier (50) is transported along a conveying track (42) on a conveying carriage (44) or a conveyor belt (46) of the conveying means (40), wherein the product carrier (50) itself does not assume any product conveyance,
the product carrier (50) carries precisely one component (70) and has a weight which corresponds to not more than a 5-fold maximum load capacity of the product carrier (50).

2. Method according to claim 1,
**characterized in that**
during painting the component (70) is arranged on the manipulating robot (30).

3. Method according to claim 1 or 2,
**characterized in that**
during a painting process carried out by the painting robot (20) the manipulating robot (30) holds the component (70) in different positions.

4. Method according to any one of claims 1 to 3,
**characterized in that**
after painting the component (70) is conveyed by means of the conveying means (40) to a dryer (90), a curing station (92) and/or a cooling zone (94).

5. Method according to any one of claims 1 to 4,
**characterized in that**
the painting robot (20) is arranged in a painting booth (60) and
the component (70) is transported by means of the conveying means (40) and/or by means of the manipulating robot (30) into the painting booth (60).

6. Device for painting a component (70), in particular for carrying out the method according to any one of claims 1 to 5, comprising
- a painting robot (20) for painting the component (70) and
- a conveying means (40) for transporting the component (70),
- at least one product carrier (50), on which the component (70) to be painted can be positioned and which is arranged in a releasable manner on the conveying means (40),
- a manipulating robot (30), with which the product carrier (50) together with the component (70) can be removed from the conveying means (40) for painting and after painting can be re-delivered to the conveying means (40),
**characterized in that**
the conveying means (40) comprises at least one conveying carriage (44) or a conveyor belt, with which the product carrier (50) can be transported along a conveying track (42), wherein the product carrier (50) itself does not assume any product conveyance,
**in that** with the product carrier (50) precisely one component (70) can be carried and the product carrier (50) has a weight which corresponds to not more than a 5-fold maximum load capacity of the product carrier (50).

7. Device according to claim 6,
**characterized in that**
the at least one product carrier (50) has a weight which corresponds to not more than a 4-fold or 3-fold maximum load capacity of the product carrier (50).

8. Device according to claim 6 or 7,
**characterized in that**
the painting robot (20) and the manipulating robot (30) are coupled mechanically and/or via data link.

9. Device according to any one of claims 6 to 8,
**characterized in that**
a painting booth (60) is provided, in which the painting robot (20) and the manipulating robot (30) are arranged.

10. Device according to any one of claims 6 to 9,
**characterized in that**
a painting booth (60) is provided, in which the painting robot (20) is arranged and the conveying means (40) runs outside the painting booth (60).

## Revendications

1. Procédé destiné à la peinture d'un composant (70),
- selon lequel le composant (70) est transporté sur un support de produit (50) au moyen d'un dispositif de convoyage (40) et peint au moyen d'un robot de peinture (20),
- selon lequel le support de produit (50) est, conjointement avec le composant (70), retiré du dispositif de convoyage (40) avant la peinture, à l'aide d'un robot de manutention (30),
- selon lequel le composant (70) est peint au moyen du robot de peinture (20),
- selon lequel le composant (70) est, pendant la peinture, disposé sur le support de produit (50), qui est maintenu à l'aide du robot de manutention (30), et
- selon lequel le composant (70) est, après la peinture, à nouveau fourni au dispositif de convoyage (40) au moyen du robot de manutention (30),
**caractérisé :**
**en ce que** le support de produit (50) est, le long d'un trajet de convoyage (42), transporté sur une navette de convoyage (44) ou un tapis de convoyage (46) du dispositif de convoyage (40), le support de produit (50) lui-même n'assurant pas de convoyage de produits,
**en ce que** le support de produit (50) porte exactement un composant (70) et possède un poids qui correspond au maximum à cinq fois une charge utile maximale du support de produit (50).

2. Procédé selon la revendication 1,
**caractérisé :**
**en ce que**, pendant la peinture, le composant (70) est disposé sur le robot de manutention (30).

3. Procédé selon la revendication 1 ou 2,
**caractérisé :**
**en ce que**, pendant un processus de peinture, qui est mis en oeuvre à l'aide du robot de peinture (20), le robot de manutention (30) maintient le composant (70) dans différentes positions.

4. Procédé selon une des revendications 1 à 3,
**caractérisé :**
**en ce que** le composant (70) est, après la peinture, convoyé vers un dispositif de séchage (90), une station de trempe (92) et/ou une zone de recuit (94) au moyen du dispositif de convoyage (40).

5. Procédé selon une des revendications 1 à 4,
**caractérisé :**
**en ce que** le robot de peinture (20) est placé dans une cabine de peinture (60), et
**en ce que** le composant (70) est transporté dans la cabine de peinture (60) au moyen du dispositif de convoyage (40) et/ou au moyen du robot de manutention (30).

6. Appareil destiné à la peinture d'un composant (70), plus particulièrement pour la mise en oeuvre du procédé selon une des revendications 1 à 5, avec :
- un robot de peinture (20) pour la peinture du composant (70), et
- un dispositif de convoyage (40) pour le transport du composant (70),
- au moins un support de produit (50), sur lequel le composant (70) devant être peint est mis en place et qui est disposé sur le dispositif de convoyage (40) de manière démontable,
- un robot de manutention (30), avec lequel le support de produit (50), conjointement avec le composant (70) peut, pour la peinture, être retiré du dispositif de convoyage (40) et, après la peinture, être de nouveau fourni au dispositif de convoyage (40),
**caractérisé :**
**en ce que** le dispositif de convoyage (40) comprend au moins une navette de convoyage (44) ou un tapis de convoyage (46), le support de produit (50) pouvant ainsi être transporté le long d'un trajet de convoyage (42), le support de produit (50) lui-même n'assurant pas de convoyage de produits, et
**en ce qu'**avec le support de produit (50), un composant (70) exactement peut être porté, et le support de produit (50) possède un poids qui correspond au maximum à cinq fois une charge utile maximale du support de produit (50).

7. Dispositif selon la revendication 6,
**caractérisé :**
**en ce que** le au moins un support de produit (50) possède un poids qui correspond au maximum à quatre fois ou trois fois une charge utile maximale du support de produit (50).

8. Dispositif selon la revendication 6 ou 7,
**caractérisé :**
**en ce que** le robot de peinture (20) et le robot de manutention (30) sont couplés de manière mécanique et/ou de manière informatique.

9. Dispositif selon une des revendications 6 à 8,
**caractérisé :**
**en ce qu'**une cabine de peinture (60) est prévue, dans laquelle le robot de peinture (20) et le robot de manutention (30) sont disposés.

10. Dispositif selon une des revendications 6 à 9,
**caractérisé :**
**en ce qu'**une cabine de peinture (60) est prévue, dans laquelle le robot de peinture (20) est disposé, et
**en ce que** le dispositif de convoyage (40) s'étend à l'extérieur de la cabine de peinture (60).
